# EUROPEAN PATENT APPLICATION

(11) **EP 1 475 355 A1**
(43) Date of publication of application: **10.11.2004**
(21) Application number: 03705189.3
(22) Date of filing: 14.02.2003
(51) Int. Cl.: C03B 18/18, C03B 18/22, C03C 3/087, C03C 3/085, C03C 3/093, C03C 3/091, C03C 3/089, C03C 3/112

(54) **METHOD FOR PRODUCING FLOAT GLASS**

(30) Priority: 15.02.2002 JP 2002038410
(71) Applicant: ASAHI GLASS COMPANY LTD., Tokyo 100-8405 (JP)
(72) Inventor: HIROMATSU, Kuniaki, c/o Asahi Glass Company, Ltd., Yokohama-shi, Kanagawa 230-0045 (JP); IGA, Motoichi, c/o Asahi Glass Company, Ltd., Yokohama-shi, Kanagawa 230-0045 (JP)
(74) Representative: Müller-Boré & Partner Patentanwälte
(86) International application number: PCT/JP2003/001589
(87) International publication number: WO 2003/068697

(57) **Abstract**

A process for producing float glass for a glass substrate particularly for LCD or PDP, the process comprising continuously supplying molten glass on molten tin, stretching the molten glass to form a glass ribbon, and cutting the glass ribbon after it is separated from the molten tin, characterized in that the temperature T₀ of the glass ribbon when it is separated from the molten tin is from (T_{G} - 50°C) to (T_{G} + 30°C), where T_{G} is the glass transition point of the float glass.

## Description

### TECHNICAL FIELD

The present invention relates to a process for producing float glass, particularly float glass suitable for a glass substrate of a flat panel display (hereinafter referred to as FPD) such as a liquid crystal display (hereinafter referred to as LCD) or a plasma display panel (hereinafter referred to as PDP).

### BACKGROUND ART

Float glass has been widely used for e.g. window glass and a mirror, and in recent years, its application to a glass substrate of FPD, particularly TFT-LCD or PDP has been increasing.

Such float glass is produced by a known float process. Namely, it is produced by continuously supplying molten glass on molten tin, stretching the molten glass to form a glass ribbon, separating the glass ribbon from the molten tin, and cooling and then cutting it.

The molten tin is contained in a float bath which is a huge steel tank lined with a specific refractory material. The atmosphere in the float bath is a reducing atmosphere containing a nitrogen gas as the main component and containing e.g. a hydrogen gas in addition.

In a case of producing float glass comprising soda lime silica glass, the upper molten tin temperature i.e. the temperature of the molten tin at a part where the molten glass is continuously supplied is 1050°C, and the lower molten tin temperature i.e. the temperature of the molten tin at a part where the glass ribbon is separated is 600°C. Further, the glass transition point of the soda lime silica glass is 550°C.

The glass ribbon separated from the molten tin is carried to a lehr by lift-out rollers and cooled in the lehr while being carried by the rollers similarly. The cooling is carried out while adjusting the atmosphere temperature in the lehr so that the time for which the temperature of the glass ribbon is within a range of from the strain point to the annealing point is as long as possible. The annealing point is usually substantially the same as the glass transition point.

The cooled glass ribbon is cut into a predetermined dimension to obtain float glass.

In production of TFT-LCD, an array-side float glass comprising float glass and a gate electrode, TFT and the like formed on the float glass, and a color-filter-side substrate comprising a glass substrate obtained by cutting float glass into a predetermined dimension and color filters of RGB, black matrix and the like formed on the glass substrate, are bonded to each other. Then, the array-side float glass to which the color-filter-side substrate is bonded, is cut in accordance with the dimension of the color-filter-side substrate to obtain TFT-LCD.

In recent years, along with increase in size of TFT-LCD, pattern misalignment of the TFT and the color filter when the array-side float glass and the color-filter-side substrate are bonded to each other tends to be significant, such being problematic.

It is an object of the present invention to provide a process for producing float glass which overcomes the above problems.

### DISCLOSURE OF THE INVENTION

The present inventors have considered that the above pattern misalignment along with the increase in size of TFT-LCD results from plane strain in the float glass to be used for the glass substrate, and achieved the present invention. Namely, a stress component in a plane direction i.e. plane stress is unavoidably present in the float glass produced by continuous forming, and the above plane stress is released when the float glass is cut to obtain a glass substrate (color-filter-side glass substrate) having a desired dimension and as a result, the glass substrate deforms.

In a case where the glass substrate is small, the deformation of the glass substrate is small and is not apparent as the problem of misalignment, however, as the glass substrate becomes large along with the increase in size of TFT-LCD, the deformation of the glass substrate becomes significant, and the problem of misalignment becomes apparent.

Namely, the present invention has the following gists.
1. A process for producing float glass, which comprises continuously supplying molten glass on molten tin, stretching the molten glass to form a glass ribbon, and cutting the glass ribbon after it is separated from the molten tin, characterized in that the temperature T₀ of the glass ribbon when it is separated from the molten tin is from (T_{G} - 50°C) to (T_{G} + 30°C), where T_{G} is the glass transition point of the float glass.
2. The process for producing float glass according to 1, wherein T₀ is at most (T_{G} + 20°C).
3. The process for producing float glass according to 1 or 2, wherein the thickness of the float glass is higher than 1.5 mm.
4. The process for producing float glass according to 1, 2 or 3, wherein the thickness of the float glass is at most 3 mm.
5. The process for producing float glass according to 2, wherein the thickness of the float glass is at most 1.5 mm.
6. The process for producing float glass according to any one of 1 to 5, wherein the float glass consists essentially of, as represented by mass percentage, SiO₂: 40 to 85%, Al₂O₃: 0 to 35%, B₂O₃: 0 to 25%, MgO+CaO+SrO+BaO+ZnO: 1 to 50%, and Li₂O+Na₂O+K₂O+Rb₂O+Cs₂O : 0 to 1%.
7. The process for producing float glass according to any one of 1 to 5, wherein the float glass consists essentially of, as represented by mass percentage, SiO₂: 40 to 85%, Al₂O₃: 2 to 35%, B₂O₃: 0 to 25%, MgO+CaO+SrO+BaO+ZnO: 1 to 50%, and Li₂O+Na₂O+K₂O+Rb₂O+Cs₂O: 1.1 to 30%.
8. The process for producing float glass according to any one of 1 to 5, wherein the float glass consists essentially of, as represented by mass percentage, SiO₂: 40 to 80%, Al₂O₃: 0 to 2%, MgO+CaO+SrO+BaO+ZnO: 1 to 50%, and Li₂O+Na₂O+K₂O+Rb₂O+Cs₂O: 1.1 to 30%.

### BEST MODE FOR CARRYING OUT THE INVENTION

The thickness of the float glass (hereinafter referred to as the glass of the present invention) produced by the process for producing float glass of the present invention (hereinafter referred to as the process of the present invention) is not limited, however, it is preferably at least 0.3 mm or at most 1.5 mm when used for a glass substrate of LCD such as TFT-LCD, or higher than 1.5 mm or at most 3 mm when used for a glass substrate of PDP.

The plane stress of the glass of the present invention is preferably at most 400 kPa. If it exceeds 400 kPa, there is a fear that the deformation is significant when the glass is cut to obtain a glass substrate for TFT-LCD. It is more preferably at most 350 kPa, particularly preferably at most 300 kPa.

The plane stress was measured as follows. Namely, the plane stress was measured in a lattice form with an interval of 50 mm except for a portion with a width of 25 mm at the periphery of the glass, and the maximum value was taken as the plane stress.

When the glass of the present invention is used for a glass substrate for TFT-LCD, the compaction when a heat treatment A of raising the temperature from 20°C at 100°C/h (hour), maintaining the temperature at 450°C for 1 hour and then decreasing the temperature at 100°C/h to 20°C is carried out, i.e. the rate of change in the distance between two points on the surface of the glass substrate as before and after the heat treatment is preferably at most 15 ppm. If it exceeds 15 ppm, there is a fear that the pattern misalignment is significant at the time of array side patterning.

When the glass of the present invention is used for a glass substrate for PDP, the compaction when a heat treatment of raising the temperature from 20°C at 100°C/h, maintaining the temperature at 580°C for 1 hour and then decreasing the temperature at 100°C/h to 20°C is carried out, is preferably at most 500 ppm. If it exceeds 500 ppm, there is a fear that the pattern misalignment is significant at the time of array side patterning.

In the process of the present invention, the temperature T₀ of the glass ribbon when it is separated from the molten tin is measured preferably by a radiation thermometer, however, the temperature of the molten tin within 700 mm from the part where the glass ribbon is separated may be employed as T₀.

If T₀ exceeds (T_{G} + 30°C), the plane stress tends to be great. It is preferably at most (T_{G} + 20°C). Particularly in a case where the thickness of the glass of the present invention is at most 1.5 mm, or in a case where the compaction has to be smaller, T₀ is preferably at most (T_{G} + 20°C) .

If T₀ is less than (T_{G} - 50°C), the glass is likely to break. It is preferably at least (T_{G} - 30°C), more preferably at least (T_{G} - 20°C).

In a case where the glass of the present invention is used for e.g. a glass substrate for TFT-LCD, it preferably consists essentially of, as represented by mass percentage, SiO₂: 40 to 85%, Al₂O₃: 0 to 35%, B₂O₃: 0 to 25%, MgO+CaO+SrO+BaO+ZnO: 1 to 50%, and Li₂O+Na₂O+K₂O+Rb₂O+Cs₂O: 0 to 1%. The preferred glass of the present invention consists essentially of the above components, however, it may contain other components in an amount of at most 5% in total for example.

In a case where the glass of the present invention is used for e.g. a glass substrate for PDP, it preferably consists essentially of, as represented by mass percentage, SiO₂: 40 to 85%, Al₂O₃: 2 to 35%, B₂O₃: 0 to 25%, MgO+CaO+SrO+BaO+ZnO: 1 to 50%, and Li₂O+Na₂O+K₂O+Rb₂O+Cs₂O: 1.1 to 30%, or SiO₂: 40 to 80%, Al₂O₃: 0 to 2%, MgO+CaO+SrO+BaO+ZnO: 1 to 50%, and Li₂O+Na₂O+K₂O+Rb₂O+Cs₂O: 1.1 to 30%. The preferred glass of the present invention consists essentially of the above components, however, it may contain other components in an amount of at most 5% in total for example.

### EXAMPLES

Float glass having T_{G} of 710°C and having a composition as represented by mass percentage of SiO₂: 59.3%, Al₂O₃: 17.5%, B₂O₃: 7.7%, CaO: 4.05%, MgO: 3.25%, BaO: 0.16%, SrO: 7.64%, Cl: 0.15%, F: 0.18%, Na₂O: 0.01% and Fe₂O₃: 0.056% was produced as follows.

Namely, materials were melted in a glass melting furnace with a maximum temperature of 1600°C to obtain molten glass in which no unmelted substance was present, and the molten glass was continuously supplied on molten tin in a float bath. The temperature of the molten glass continuously supplied on the molten tin was 1250°C.

The molten glass was stretched in a direction to the outlet of the float bath on the molten tin in the float bath to obtain a glass ribbon having a thickness of 0.8 mm. On this occasion, an appropriate stretching force was applied to both ends of the glass ribbon at (a plurality of) appropriate positions by using a pair of assist rolls on each position. Here, the outlet of the float bath is a part where the glass ribbon is pulled out from the float bath, and is located at the opposite side of a part where the molten glass is continuously supplied, i.e. the inlet of the float bath.

The glass ribbon was separated from the molten tin at a temperature shown by T₀ (unit: °C) in Table 1, carried to a lehr by lift-out rollers, and annealed and cooled in the lehr. The temperature of the glass ribbon in the lehr was from 670 to 710°C at the inlet of the lehr and from 490 to 520°C at the outlet of the lehr. Further, the residence time of the glass ribbon in the lehr was 3 minutes.

The cooled glass ribbon was cut into 546 mm × 546 mm, and the plane strain S (unit: kPa) and the compaction C (unit: "ppm) by the heat treatment A were measured. The results are shown in Table 1.

**Table 1**

| T₀ | S | C |
|---|---|---|
| 751 | 403 | - |
| 740 | 273 | - |
| 736 | 264 | - |
| 727 | 234 | 13.0 |
| 721 | 195 | 11.9 |
| 707 | 164 | 10.6 |

### INDUSTRIAL APPLICABILITY

According to the present invention, float glass having a small plane stress suitable for a glass substrate for FPD such as LCD or PDP can be obtained.

## Claims

1. A process for producing float glass, which comprises continuously supplying molten glass on molten tin, stretching the molten glass to form a glass ribbon, and cutting the glass ribbon after it is separated from the molten tin, **characterized in that** the temperature T₀ of the glass ribbon when it is separated from the molten tin is from (T_{G} - 50°C) to (T_{G} + 30°C), where T_{G} is the glass transition point of the float glass.

2. The process for producing float glass according to Claim 1, wherein T₀ is at most (T_{G} + 20°C).

3. The process for producing float glass according to Claim 1 or 2, wherein the thickness of the float glass is higher than 1.5 mm.

4. The process for producing float glass according to Claim 1, 2 or 3, wherein the thickness of the float glass is at most 3 mm.

5. The process for producing float glass according to Claim 2, wherein the thickness of the float glass is at most 1.5 mm.

6. The process for producing float glass according to any one of Claims 1 to 5, wherein the float glass consists essentially of, as represented by mass percentage, SiO₂: 40 to 85%, Al₂O₃: 0 to 35%, B₂O₃: 0 to 25%, MgO+CaO+SrO+BaO+ZnO: 1 to 50%, and Li₂O+Na₂O+K₂O+Rb₂O+Cs₂O: 0 to 1%.

7. The process for producing float glass according to any one of Claims 1 to 5, wherein the float glass consists essentially of, as represented by mass percentage, SiO₂: 40 to 85%, Al₂O₃: 2 to 35%, B₂O₃: 0 to 25%, MgO+CaO+SrO+BaO+ZnO: 1 to 50%, and Li₂O+Na₂O+K₂O+Rb₂O+Cs₂O: 1.1 to 30%.

8. The process for producing float glass according to any one of Claims 1 to 5, wherein the float glass consists essentially of, as represented by mass percentage, SiO₂: 40 to 80%, Al₂O₃: 0 to 2%, MgO+CaO+SrO+BaO+ZnO: 1 to 50%, and Li₂O+Na₂O+K₂O+Rb₂O+Cs₂O: 1.1 to 30%.
